(19) Europäisches Patentamt
European Patent Office
Office européen des brevets

(11) Veröffentlichungsnummer: **0 499 863 B1**

(12) **EUROPÄISCHE PATENTSCHRIFT**

(45) Veröffentlichungstag der Patentschrift: **04.01.95**

(51) Int. Cl.6: **C09C 1/36**, C01G 23/053

(21) Anmeldenummer: **92101653.1**

(22) Anmeldetag: **01.02.92**

(54) **Verfahren zur Herstellung von feinteiligem Titandioxid und feinteiliges Titandioxid.**

(30) Priorität: **21.02.91 DE 4105345**

(43) Veröffentlichungstag der Anmeldung:
**26.08.92 Patentblatt 92/35**

(45) Bekanntmachung des Hinweises auf die Patenterteilung:
**04.01.95 Patentblatt 95/01**

(84) Benannte Vertragsstaaten:
**BE DE ES FR GB IT NL**

(56) Entgegenhaltungen:
**EP-A- 0 220 509**
**CA-A- 962 142**
**GB-A- 2 205 088**

(73) Patentinhaber: **KRONOS TITAN-Gesellschaft mbH**
**Postfach 10 07 20**
**D-51307 Leverkusen (DE)**

(72) Erfinder: **Elfenthal, Lothar, Dr.**
**Marienstrasse 39**
**W-4018 Langenfeld (DE)**
Erfinder: **Klein, Edgar, Dr.**
**Auenweg 2**
**W-5068 Odenthal (DE)**
Erfinder: **Rosendahl, Franz, Dr.**
**Hegelstrasse 13**
**W-5090 Leverkusen 1 (DE)**

**Beschreibung**

Die Erfindung betrifft ein Verfahren zur Herstellung von feinteiligem Titandioxid, das im wesentlichen transparent für sichtbares Licht und im wesentlichen absorbierend für UV-Strahlung ist, sowie ein feinteiliges Titandioxid, das im wesentlichen transparent für sichtbares Licht und im wesentlichen absorbierend für UV-Strahlung ist.

Es ist bekannt, daß das Streuvermögen eines Pigmentes, z. B. eines Weißpigmentes, für sichtbares Licht von der Teilchengröße abhängt. Für Titandioxidpigmente ist die optimale Teilchengröße für das Streuvermögen in Abhängigkeit vom umgebenden Medium etwa halb so groß wie die Lichtwellenlänge. Unterhalb dieser optimalen Teilchengröße nimmt das Streuvermögen mit abnehmender Teilchengröße ab. Infolge dieser Abnahme des Streuvermögens für sichtbares Licht behalten von Natur aus transparente Medien, in die ein feinteiliges Titandioxid mit einer Teilchengröße wesentlich unterhalb der halben Lichtwellenlänge eingearbeitet wird, aufgrund des sehr geringen Streuvermögens dieses Titandioxids weitgehend ihre Transparenz für sichtbares Licht. Dieser Sachverhalt wird vereinfacht dadurch zum Ausdruck gebracht, daß ein solches Titandioxid als "im wesentlichen transparent für sichtbares Licht" bezeichnet wird. Dagegen bleibt die Absorption der UV-Strahlung von der abnehmenden Teilchengröße des kristallinen Titandioxids praktisch unbeeinflußt.

Dieses feinteilige Titandioxid, das im wesentlichen transparent für sichtbares Licht und im wesentlichen absorbierend für UV-Strahlung ist, wird im folgenden auch "subpigmentäres Titandioxid" genannt.

Für dieses Produkt gibt es viele Einsatzgebiete. So wird es in Kunststoffolien oder Kunststoffbehältern eingesetzt, bei denen durch die Wandung ein Blick in das Innere getan werden kann, die in ihnen befindliche Ware aber durch die Absorption des schädlichen UV-Anteils des Sonnenlichtes durch das in der Wandung befindliche subpigmentäre Titandioxid geschützt ist. In Anstrichstoffen, z. B. Holzschutzlasuren, findet subpigmentäres Titandioxid Anwendung als UV-Absorber. Ein anderes Einsatzgebiet sind Kosmetika, z. B. Sonnenschutzkosmetika, und andere Hautpflegemittel, in denen subpigmentäres Titandioxid zur Absorption der schädlichen UV-Strahlung eingesetzt wird. Ein spezielles Anwendungsgebiet ist die Erzeugung spezieller optischer Effekte in Lacken, z. B. des sogenannten "downflop" (siehe EP-A1-0 270 472)

Es gibt verschiedene Methoden, subpigmentäres Titandioxid herzustellen. So können nach der DE-A1-38 17 909 geeignete Verfahren zur Herstellung von nadelförmigen Produkten hierfür eingesetzt werden, z. B. die Hydrolyse einer geeigneten Titanverbindung wie Titantetrachlorid oder eines organischen oder anorganischen Titanats oder die Oxidation einer oxidierbaren Titanverbindung, z. B. in gasförmigem Zustand. Dort wird auch ein spezielles Verfahren für die Herstellung eines nadelförmigen subpigmentären Titandioxids beschrieben, bei dem ein Titandioxidhydrat, welches in üblicher Weise durch Hydrolyse aus einer Titanylsulfatlösung gewonnen wurde, in wässeriger Aufschlämmung erhitzt und zu einer ebenfalls erhitzten wässerigen Natriumhydroxidlösung zugegeben wird. Das erhaltene Gemisch wird eine zeitlang beim Siedepunkt gehalten. Die nunmehr Natriumtitanat enthaltende Suspension wird abgekühlt und filtriert und der Filterkuchen gewaschen. Danach wird durch Zugabe von Salzsäure im Natriumtitanat enthaltenden Gemisch ein pH-Wert von 2,8 bis 3,1 eingestellt und danach das Gemisch durch den Zusatz von weiteren Mengen an Salzsäure peptisiert. Bei dieser Behandlung wird das Natriumtitanat hydrolytisch zersetzt, und das Gemisch enthält dann Titandioxid, das in sehr feinen Teilchen vorliegt und dessen kleine Kristallite Rutilstruktur aufweisen. Die Teilchen sind nadelförmig. Durch Neutralisation wird der im Gemisch enthaltene Feststoff geflockt und anschließend durch Filtration von der Flüssigkeit abgetrennt und gewaschen. Aus der CA-A 962 142 ist ferner bekannt, ein derart hergestelltes subpigmentäres Titandioxid nach Zusatz von $K_2O$ und $P_2O_5$ bei 500 bis 800 °C zu glühen.

Bei den bekannten Verfahren ist es schwierig, die Teilchengröße und Teilchenform des subpigmentären Titandioxids entsprechend den jeweiligen Erfordernissen der unterschiedlichen Anwendungsgebiete zu variieren.

Es wurde ein neues Verfahren zur Herstellung von feinteiligem Titandioxid, das im wesentlichen transparent für sichtbares Licht und im wesentlichen absorbierend für UV-Strahlung ist, gefunden, bei dem diese Nachteile der bekannten Verfahren vermieden werden. Dieses Verfahren ist dadurch gekennzeichnet, daß bei der Herstellung des feinteiligen Titandioxids feinteiliges Zinndioxid, dessen Teilchengröße 1 bis 10 nm,vorzugsweise 1 bis 4 nm beträgt, in einer Menge von 0,5 bis 10 Gewichtsprozent, bezogen auf die Menge des hergestellten Titandioxids, eingesetzt wird.

Dieses Verfahren kann zusätzlich zum erfindungsgemäßen Einsatz des feinteiligen Zinndioxids alle an sich für die Herstellung von subpigmentärem Titandioxid bekannten Verfahrensschritte enthalten.

Eine besondere Ausführungsform des erfindungsgemäßen Verfahrens ist dadurch gekennzeichnet, daß

a) ein durch Hydrolyse einer Titanylsulfatlösung hergestelltes Titandioxidhydrat mit Anatasstruktur mit Wasser zu einer Suspension mit einer Konzentration von 20 bis 26 Gewichtsprozent $TiO_2$ aufgeschlämmt

wird,

b) die erhaltene Titandioxidhydratsuspension auf 60 bis 70 °C erhitzt wird ,

c) die erhitzte Titandioxidhydratsuspension zu einer solchen Menge einer auf 90 bis 100 °C erhitzten wässerigen Natriumhydroxidlösung unter Rühren zugegeben wird, daß nach ihrer Zugabe das Gewichtsverhältnis von NaOH zu $TiO_2$ im Gemisch 1,25 bis 1,65 beträgt,

d) das Gemisch zum Sieden erhitzt und 120 bis 140 Minuten beim Siedepunkt gehalten wird,

e) das Gemisch danach auf etwa 50 bis 60 °C abgekühlt und filtriert wird,

f) der erhaltene Filterkuchen so lange gewaschen wird, bis der $SO_4^{2-}$-Gehalt im Waschfiltrat weniger als 0,05 g/l beträgt,

g) der gewaschene Filterkuchen bis zu einem $TiO_2$-Gehalt von 10 bis 25 Gewichtsprozent mit Wasser angeteigt wird und das erhaltene Gemisch mit einer 20 bis 25 Gewichtsprozent HCl enthaltenden Salzsäure bis zu einem pH-Wert von 2,8 bis 3,1 versetzt wird,

h) das Gemisch auf 55 bis 65 °C erhitzt und bei dieser Temperatur 30 bis 45 Minuten belassen wird, wobei der pH-Bereich von 2,8 bis 3,1 eingehalten wird,

i) zu dem Gemisch eine kolloidale Zinndioxidlösung zugegeben wird, in der das Zinndioxid eine Teilchengröße von 1 bis 10 nm, vorzugsweise 1 bis 4 nm aufweist,

j) das mit der kolloidalen Zinndioxidlösung versetzte Gemisch mit so viel 20 bis 25 Gewichtsprozent HCl enthaltender Salzsäure bei 55 bis 65 °C peptisiert wird, daß ein Gewichtsverhältnis von in dieser Stufe zugesetzter Salzsäure berechnet als HCl zu $TiO_2$ von 0,15 : 1 bis 0,25 : 1 eingestellt ist,

k) die erhaltene Suspension im Verlauf von 30 bis 40 Minuten zum Sieden erhitzt und 60 bis 90 Minuten beim Siedepunkt gehalten wird, und

l) die Suspension bis zu einem pH-Bereich von 4 bis 11, vorzugsweise 6 bis 8 neutralisiert wird.

Eine andere geeignete Ausführungsform des erfindungsgemäßen Verfahrens ist dadurch gekennzeichnet, daß das feinteilige Titandioxid durch Hydrolyse einer bei den betreffenden Hydrolysebedingungen unter Rutilbildung hydrolysierenden Verbindung des vierwertigen Titans in Anwesenheit von Zinndioxid, dessen Teilchengröße 1 bis 10 nm, vorzugsweise 1 bis 4 nm beträgt, hergestellt wird.

Eine besonders geeignete Ausführungsform dieses Verfahrens ist dadurch gekennzeichnet, daß als Verbindung des vierwertigen Titans Titantetrachlorid oder eine Verbindung eingesetzt wird, die durch die Umsetzung von Titantetrachlorid mit Wasser gebildet wird.

Die Hydrolyse kann z. B. unter Erwärmung, gegebenenfalls noch Verdünnen der Lösung mit Wasser oder einer geeigneten wässerigen Lösung, und/oder durch Zugabe einer alkalisch reagierenden Substanz, z. B. Natriumhydroxid, erfolgen.

Es ist wesentlich, daß das Zinndioxid in einer Teilchengröße eingesetzt wird, die überwiegend 1 bis 10 nm, vorzugsweise 1 bis 4 nm beträgt. Da beim Zinndioxid eine statistische Teilchengrößenverteilung vorliegt, verstehen sich die beanspruchten Teilchengrößenbereiche in üblicher Weise so, daß das Zinndioxid in untergeordnetem Maße auch Teilchen enthalten kann, die außerhalb der angegebenen Grenzen liegen. In der Regel sollten im beanspruchten Teilchengrößenbereich von 1 bis 10 nm die Teilchen mit einer Größe von 1 bis 4 nm besonders stark vertreten sein, da Teilchen dieser Größe für das erfindungsgemäße Verfahren besonders wirksam sind. Der Einsatz von Zinndioxid mit einer Teilchengröße oberhalb 10 nm ist unzweckmäßig, weil dann beim Einsatz der gleichen Zinndioxidmenge weniger Zinndioxidteilchen zur Verfügung stehen.

Es wurde gefunden, daß es möglich ist, durch eine bestimmte Verfahrensweise ein Zinndioxid mit den beanspruchten Teilchengrößenbereichen herzustellen und einzusetzen. So ist eine besonders geeignete Ausführungsform des erfindungsgemäßen Verfahrens dadurch gekennzeichnet, daß das Zinndioxid in Form einer kolloidalen Lösung eingesetzt wird, welche durch langsame Zugabe von Zinntetrachlorid zu destilliertem Wasser bei einer Temperatur von maximal 22 °C bis zu einer Konzentration von 180 bis 220 g/l $SnO_2$, Verdünnen dieser Lösung mit destilliertem Wasser auf 10 g/l $SnO_2$, wobei die Temperatur von 22 °C nicht überschritten wird, und einstündiges Reifen der verdünnten Lösung bei 20 bis 22 °C hergestellt wird.

Andere Verfahrensweisen, die ebenfalls zu einem Zinndioxid mit einer Teilchengröße von 1 bis 10 nm, vorzugsweise 1 bis 4 nm führen, sollen damit nicht ausgeschlossen sein.

Das erfindungsgemäß hergestellte feinteilige Titandioxid kann in Form einer Suspension vorliegen, und diese Suspension kann direkt, ohne daß das feinteilige Titandioxid aus ihr abgetrennt wird, weiterverarbeitet werden.

Nach einer besonderen Ausführungsform des erfindungsgemäßen Verfahrens wird das hergestellte Titandioxid aus der Suspension geflockt und durch Filtration von der flüssigen Phase abgetrennt. Das abgetrennte Titandioxid kann gewaschen werden.

Eine besondere Ausführungsform der Erfindung ist dadurch gekennzeichnet, daß das aus der Suspension von der flüssigen Phase abgetrennte Titandioxid getrocknet wird. Dieses getrocknete Titandioxid kann

3

gemahlen werden.

Es ist oft zweckmäßig, nach der Neutralisation, aber, im Falle der Trocknung des Titandioxids, vor seiner Trocknung eine Substanz zuzusetzen, die die Bildung harter Agglomerate verhindert; geeignet hierfür sind z. B. Alkanolamine oder Polyole.

Das erhaltene Produkt besteht in der Regel aus nadelförmigen Teilchen mit Rutilstruktur.

Nach einer besonderen Ausführungsform des erfindungsgemäßen Verfahrens wird das getrocknete Titandioxid bei 300 bis 800 ° C; vorzugsweise 400 bis 600 °C getempert.

Besteht das erfindungsgemäße subpigmentäre Titandioxid aus nadelförmigen Teilchen, dann kann durch die Temperung eine Verrundung dieser Teilchen erreicht werden. Im Gegensatz zu den bekannten Verfahren ist ein Zusatz von $K_2O$ und $P_2O_5$ wie auch von anderen Stoffen nicht erforderlich. Wird bei der Temperung eine Temperatur zwischen 400 und 600 °C eingehalten, dann tritt eine merkliche Verrundung der Teilchen ein, ohne daß diese Teilchen eine wesentliche Größenzunahme erfahren. Bei Temperaturen unter 400 °C wird noch ein geringer Verrundungseffekt erreicht, bei Temperaturen oberhalb 600 °C tritt eine häufig unerwünschte Vergröberung der Teilchen ein.

Das subpigmentäre Titandioxid kann ohne weitere Nachbehandlung eingesetzt werden. Es ist aber auch oft zweckmäßig, nach einer besonderen Ausführungsform der Erfindung das Titandioxid mit einer oder mehreren anorganischen und/oder organischen Substanzen nachzubehandeln.

Bei dieser Nachbehandlung wird das subpigmentäre Titandioxid mit anorganischen und/oder organischen Substanzen beschichtet. Die Nachbehandlung kann bereits in der Suspension erfolgen, in der das hergestellte subpigmentäre Titandioxid zunächst vorliegt, wobei diese Nachbehandlung auch im Rahmen des abschließenden Neutralisationsschrittes erfolgen kann. Sie kann aber auch an dem geflockten Titandioxid vor oder nach seiner Abtrennung aus der Suspension und im letzteren Fall vor oder nach der Trocknung und gegebenenfalls der Temperung erfolgen. Der Nachbehandlung kann eine Mahlung vorgeschaltet sein. Gegebenenfalls kann es notwendig sein, vor der Mahlung dem subpigmentären Titandioxid ein Dispergiermittel zuzusetzen. Für die Nachbehandlung können beispielsweise an sich bekannte Verfahren wie die gemäß der CA-A- 962 142 verwendet werden.

Gegenstand der Erfindung ist auch ein feinteiliges Titandioxid, das im wesentlichen transparent für sichtbares Licht und im wesentlichen absorbierend für UV-Strahlung ist, bestehend aus nadelförmigen Teilchen mit Rutilstruktur mit einer Länge von 10 bis 100 nm und einem Längen:Durchmesserverhältnis von 8:1 bis 3:1, wobei diese Teilchen 0,5 bis 10 Gewichtsprozent $SnO_2$ enthalten.

Gegenstand der Erfindung ist auch eine wässerige Suspension eines solchen feinteiligen Titandioxids.

Ein weiterer Gegenstand der Erfindung ist ein Titandioxid, das im wesentlichen transparent für sichtbares Licht und im wesentlichen absorbierend für UV-Strahlung ist, bestehend aus abgerundeten Teilchen mit Rutilstruktur mit einem Durchmesser von 10 bis 100 nm, wobei diese Teilchen 0,5 bis 10 Gewichtsprozent $SnO_2$ enthalten.

Dieses feinteilige Titandioxid, das aus nadelförmigen oder abgerundeten Teilchen besteht, enthält nach einer besonderen Ausführungsform der Erfindung eine Beschichtung aus mindestens einer durch Nachbehandlung aufgebrachten anorganischen und/oder organischen Substanz.

Ein Gegenstand der Erfindung ist auch eine wässerige Suspension eines eine solche Beschichtung enthaltenden feinteiligen Titandioxids.

Es wurde gefunden, daß es in einfacher Weise gelingt, durch die Menge des zugesetzten Zinndioxids die Teilchengröße des hergestellten subpigmentären Titandioxids im Bereich von 10 bis 100 nm für die längste Achse der nadelförmigen Teilchen mit geringer Größenverteilungsbreite gezielt zu beeinflussen.

Je höher der $SnO_2$-Zusatz ist, desto geringer ist die Teilchengröße des erhaltenen Titandioxids. Die Menge des bei der Herstellung des subpigmentären Titandioxids zugesetzten Zinndioxids liegt vorzugsweise zwischen 1 und 10 Gewichtsprozent, bezogen auf $TiO_2$. Die Größe der erhaltenen Teilchen kann elektronenmikroskopisch oder durch die Ermittlung der Oberflächengröße nach BET erfolgen.

Wesentlich für die Wirksamkeit der zugesetzten kolloidalen Zinndioxidlösung ist der Umstand, daß diese kolloidale Zinndioxidlösung so hergestellt wird, daß nicht nur der kritische Teilchengrößenbereich bei der Herstellung des Zinndioxids eingestellt wird, sondern daß auch sichergestellt wird, daß das gebildete Zinndioxid nach seiner Herstellung und vor seinem Einsatz bei der Herstellung des subpigmentären Titandioxids keine Teilchenvergröberung erfährt.

Vorzugsweise kann zu diesem Zweck folgendermaßen vorgegangen werden:

In eine Vorlage mit destilliertem Wasser wird unter Kühlung bei einer Temperatur von maximal 22 °C Zinntetrachlorid bis zu einer Konzentration von 180 bis 220 g/l $SnO_2$ eingetropft. Die so erhaltene Stammlösung ist für lange Zeit lagerstabil.

Zur Herstellung der gewünschten kolloidalen Zinndioxidlösung wird diese Stammlösung mit destilliertem Wasser auf 10 g/l $SnO_2$ verdünnt. Die Temperatur darf dabei 22 °C nicht übersteigen. Anschließend wird das Gemisch bei 20 bis 22 °C eine Stunde gehalten und dabei gereift. Die Lösung ist dann praktisch klar und muß sofort eingesetzt werden.

Durch folgende Beispiele wird die Erfindung näher erläutert:

Beispiel 1

220 g einer wässerigen Suspension eines Titandioxidhydrates der Anatasform, berechnet als $TiO_2$, das durch die übliche Hydrolyse aus einer durch Aufschluß von Ilmenit in Schwefelsäure, Abtrennen von Eisen-(II)-sulfat-Heptahydrat, Klären und Eindampfen gewonnenen Titanylsulfatlösung gewonnen und gewaschen worden war, wurden mit destilliertem Wasser zu einer Suspension mit einem $TiO_2$-Gehalt von 26 Gewichtsprozent verdünnt, und diese Suspension wurde auf etwa 60 °C erwärmt.

Die erwärmte Suspension wurde im Verlauf von 30 Minuten unter Rühren zu 550 g einer 50 Gewichtsprozent NaOH enthaltenden auf 90 °C erwärmten wässerigen Lösung zugesetzt. Das erhaltene Gemisch wurde dann 2 Stunden am Siedepunkt (etwa 108 °C) gehalten, dann auf etwa 60 °C abgekühlt und filtriert, und der Filterkuchen wurde mit destilliertem Wasser so lange gewaschen, bis der $SO_4^{2-}$-Gehalt im Waschfiltrat weniger als 0,05 g/l betrug ($SO_4^{2-}$-Nachweis durch den $BaCl_2$-Test).

Der gewaschene Filterkuchen wurde mit destilliertem Wasser zu einer Suspension mit einem $TiO_2$-Gehalt von 220 g/l angeteigt. Danach wurde 25 %ige Salzsäure zugegeben, bis im Gemisch ein pH-Wert von 2,8 bis 3,1 eingestellt war. Danach wurde die Suspension auf 60 °C erhitzt und 30 Minuten bei dieser Temperatur belassen. Dabei durfte der angegebene pH-Bereich nicht verlassen werden. Zu diesem Zweck wurde der pH-Wert kontrolliert und gegebenenfalls nachgestellt.

Danach wurde eine kolloidale Zinndioxidlösung zugegeben, die folgendermaßen hergestellt wurde:
Zur Herstellung einer Stammlösung wurde in eine Vorlage aus destilliertem Wasser unter Kühlung Zinntetrachlorid (p.a., 99 % $SnCl_4$) bis zu einer Konzentration von 200 g/l $SnO_2$ eingetropft. Die für die bei der Herstellung des subpigmentären Titandioxids benötigte $SnO_2$-Menge entsprechende Menge der Stammlösung wurde mit destilliertem Wasser auf 10 g/l $SnO_2$ verdünnt. Hierbei wurde darauf geachtet, daß die Temperatur nicht über 20 °C anstieg. Anschließend wurde das Gemisch eine Stunde bei 20 °C gehalten und dabei gereift. Die Lösung war jetzt praktisch klar und mußte unmittelbar danach eingesetzt werden.

Nach der Zugabe der kolloidalen Zinndioxidlösung wurde die Suspension mit so viel 25 Gewichtsprozent HCl enthaltender Salzsäure versetzt, daß das Gewichtsverhältnis von der hier zugesetzten Salzsäuremenge berechnet als HCl zu $TiO_2$ 0,15:1 betrug. Hierbei wurde die Suspension peptisiert. Die Mischung wurde in etwa 30 Minuten zum Sieden erhitzt (Siedetemperatur etwa 108 °C) und 90 Minuten auf der Siedetemperatur gehalten. Das Gemisch wies jetzt, je nach dem Volumen der zugesetzten kolloidalen Zinndioxidlösung, einen $TiO_2$-Gehalt von etwa 100 bis 160 g/l auf.

Durch Neutralisation mit einer Natriumhydroxidlösung bis zu einem pH-Wert von 6 bis 7 wurde das in der Suspension befindliche Titandioxid geflockt und anschließend durch Filtration abgetrennt und gewaschen. Das erhaltene subpigmentäre Titandioxid bestand aus nadelförmigen Teilchen, deren kristalline Bereiche Rutilstruktur besaßen.

Bei der Herstellung des subpigmentären Titandioxids wurde die Menge der zugesetzten kolloidalen Zinndioxidlösung zwischen 1 und 10 Gewichtsprozent, berechnet als $SnO_2$ und bezogen auf $TiO_2$, variiert. Die erhaltenen Produkte wurden elektronenmikroskopisch untersucht, und ihre Oberfläche wurde nach BET gemäß DIN 66132 ermittelt. Die Ergebnisse sind in Tabelle 1 aufgeführt. Zum Vergleich ist in Tabelle 1 auch ein Produkt aufgeführt, das in gleicher Weise wie die erfindungsgemäßen Produkte, aber ohne Zusatz von kolloidaler Zinndioxidlösung hergestellt wurde.

Tabelle 1

| SnO$_2$-Zusatz Gewichtsprozent bezogen auf TiO$_2$ | BET m$^2$/g | Teilchengröße, gemessen an der größten Achse nm |
|---|---|---|
| 0 | 98-116 | 110 ± 10 |
| 1 | 110 | 80 ± 10 |
| 2 | 135 | 42 ± 7 |
| 4 | 145 | 35 ± 10 |
| 5,5 | 155 | 25 ± 10 |
| 7,5 | 155 | 20 ± 10 |
| 10 | 165 | 15 ± 5 |

Aus Tabelle 1 ist deutlich die Wirksamkeit der SnO$_2$-Zugabe auf die Teilchengröße des erhaltenen subpigmentären Titandioxids zu erkennen; desgleichen ist zu erkennen, daß durch die jeweils gewählte Menge der SnO$_2$-Zugabe die gewünschte Teilchengröße leicht angesteuert werden konnte.

Beispiel 2

Es wurde ein subpigmentäres Titandioxid wie in Beispiel 1 hergestellt, wobei verschiedene Mengen der kolloidalen Zinndioxidlösung zugesetzt wurden. Die erhaltenen Produkte wurden jeweils 2 Stunden bei verschiedenen Temperaturen getempert. Bei den getemperten Produkten wurden elektronenmikroskopisch die längste Achse und das Achsenverhältnis (längste Achse:kürzeste Achse) der Teilchen und mit der BET-Methode gemäß DIN 66132 die Oberfläche bestimmt. Die Ergebnisse sind in Tabelle 2 niedergelegt. Zum Vergleich werden nicht getemperte Produkte und ein Produkt, welches ohne SnO$_2$-Zusatz hergestellt wurde, mit angeführt.

Tabelle 2

| SnO$_2$-Zusatz Gewichtsprozent bezogen auf TiO$_2$ | Temperungstemperatur °C | nicht getempert | 400 | 600 | 800 |
|---|---|---|---|---|---|
| 0 | a) | 110±10 | 110±20 | 110±20 | 110±20 |
|  | b) | 5 | 5 | 3 | 2 |
|  | c) | 98-116 | 50 | 34 | 23 |
| 1 | a) | 80±10 | 60±10 | 50±10 | 70±20 |
|  | b) | 5 | 4 | 2 | 1-1,5 |
|  | c) | 110 | 66 | 40 | 23 |
| 7,5 | a) | 20±10 | 20±10 | 20±10 | 50±20 |
|  | b) | 5 | 2 | 1-1,5 | 1-1,5 |
|  | c) | 155 | 93 | 53 | 20 |

a) Teilchengröße (längste Achse) in nm

b) Achsenverhältnis der Teilchen (längste Achse:kürzeste Achse)

c) Oberfläche nach BET in m$^2$/g

Aus Tabelle 2 geht hervor, daß bei der Temperung des subpigmentären Titandioxids eine deutliche Verrundung der Teilchen eintrat. Diese Verrundung war zwar bei den mit SnO$_2$-Zusatz hergestellten Produkten bei Temperungstemperaturen von 400 bis 600 °C von einer gewissen Verringerung der Oberfläche begleitet, diese ist aber im wesentlichen auf die Verrundung selbst zurückzuführen. Bei einer Temperungstemperatur von 800 °C trat eine wesentliche weitere Verringerung der Oberfläche ein, die auf eine Vergrößerung der Teilchen zurückzuführen war. Die Tabelle 2 zeigt weiter, daß die getemperten Produkte mit SnO$_2$ eine wesentlich größere Oberfläche als das getemperte Produkt ohne SnO$_2$-Zusatz aufweisen, was auf eine wesentlich geringere Teilchengröße der erstgenannten Produkte zurückzuführen ist.

Beispiel 3

In eine Vorlage aus 671,2 ml destilliertem Wasser wurden bei 20 bis 22 °C unter Rühren innerhalb von 2 Minuten 260 ml einer kolloidalen Zinndioxidlösung mit einem SnO$_2$-Gehalt von 10 g/l, die wie in Beispiel 1 hergestellt wurde, zugegeben. Unmittelbar nach der Zugabe der kolloidalen Zinndioxidlösung wurden 118,7 g Titantetrachlorid unter Kühlung auf 20 bis 22 °C in diese Mischung im Verlauf von 140 Minuten zugetropft, und die Mischung wurde nach beendeter Titantetrachloridzugabe noch 5 Minuten bei dieser Temperatur gerührt.

Die entstandene leicht trübe Lösung wurde unter Rühren mit einer Geschwindigkeit von etwa 2 bis 3 °C/Minute auf Siedetemperatur (etwa 107 °C) erhitzt und 120 Minuten bei dieser Temperatur belassen. Während des Aufheizens wurde die Lösung zunächst klar, dann aber bei etwa 90 °C wieder trübe, weil Titandioxid ausfiel. Die Suspension wurde dann auf 40 °C abgekühlt und das Titandioxid durch Filtration abgetrennt. Die zugegebene $SnO_2$-Menge betrug 5,2 Gewichtsprozent, bezogen auf hergestelltes $TiO_2$.

Das erhaltene subpigmentäre Titandioxid bestand aus nadelförmigen Teilchen mit Rutilstruktur, die eine Größe von 40 ± 10 nm, gemessen an der längsten Achse, und ein Achsenverhältnis (längste Achse:kürzeste Achse) von etwa 4 aufwiesen.

Die Erfindung betrifft ein Verfahren zur Herstellung von feinteiligem Titandioxid und feinteiliges Titandioxid. Das Titandioxid ist im wesentlichen transparent für sichtbares Licht und im wesentlichen absorbierend für UV-Strahlung. Bei seiner Herstellung wird feinteiliges Zinndioxid, dessen Teilchengröße 1 bis 10 nm, vorzugsweise 1 bis 4 nm beträgt, in einer Menge von 0,5 bis 10 Gewichtsprozent, bezogen auf $TiO_2$, eingesetzt. Durch den Zinndioxidzusatz wird die Teilchengröße des Titandioxids gezielt eingestellt. Durch eine Temperung bei 300 bis 800 °C, vorzugsweise 400 bis 600 °C werden nadelförmige Teilchen verrundet. Durch eine Nachbehandlung können die Teilchen mit anorganischen und/oder organischen Substanzen beschichtet werden. Das feinteilige Titandioxid kann über Natriumtitanat durch Zersetzung mit Salzsäure oder durch eine geeignete Hydrolyse einer Verbindung des vierwertigen Titans, die zur Rutilbildung führt, hergestellt werden. Das Zinndioxid wird bevorzugt als eine kolloidale Lösung eingesetzt, die durch Umsetzung von Zinntetrachlorid mit Wasser bei maximal 22 °C gebildet wird.

## Patentansprüche

1. Verfahren zur Herstellung von feinteiligem Titandioxid, das im wesentlichen transparent für sichtbares Licht und im wesentlichen absorbierend für UV-Strahlung ist, dadurch gekennzeichnet, daß bei der Herstellung des feinteiligen Titandioxids feinteiliges Zinndioxid, dessen Teilchengröße 1 bis 10 nm, vorzugsweise 1 bis 4 nm beträgt, in einer Menge von 0,5 bis 10 Gewichtsprozent, bezogen auf die Menge des hergestellten Titandioxids, eingesetzt wird.

2. Verfahren nach Anspruch 1, dadurch gekennzeichnet, daß
   a) ein durch Hydrolyse einer Titanylsulfatlösung hergestelltes Titandioxidhydrat mit Anatasstruktur mit Wasser zu einer Suspension mit einer Konzentration von 20 bis 26 Gewichtsprozent $TiO_2$ aufgeschlämmt wird,
   b) die erhaltene Titandioxidhydratsuspension auf 60 bis 70 °C erhitzt wird,
   c) die erhitzte Titandioxidhydratsuspension zu einer solchen Menge einer auf 90 bis 100 °C erhitzten wässerigen Natriumhydroxidlösung unter Rühren zugegeben wird, daß nach ihrer Zugabe das Gewichtsverhältnis von NaOH zu $TiO_2$ im Gemisch 1,25 bis 1,65 beträgt,
   d) das Gemisch zum Sieden erhitzt und 120 bis 140 Minuten beim Siedepunkt gehalten wird,
   e) das Gemisch danach auf etwa 50 bis 60 °C abgekühlt und filtriert wird,
   f) der erhaltene Filterkuchen so lange gewaschen wird, bis der $SO_4^{2-}$-Gehalt im Waschfiltrat weniger als 0,05 g/l beträgt,
   g) der gewaschene Filterkuchen bis zu einem $TiO_2$-Gehalt von 10 bis 25 Gewichtsprozent mit Wasser angeteigt wird und das erhaltene Gemisch mit einer 20 bis 25 Gewichtsprozent HCl enthaltenden Salzsäure bis zu einem pH-Wert von 2,8 bis 3,1 versetzt wird,
   h) das Gemisch auf 55 bis 65 °C erhitzt und bei dieser Temperatur 30 bis 45 Minuten belassen wird, wobei der pH-Bereich von 2,8 bis 3,1 eingehalten wird,
   i) zu dem Gemisch eine kolloidale Zinndioxidlösung zugegeben wird, in der das Zinndioxid eine Teilchengröße von 1 bis 10 nm, vorzugsweise 1 bis 4 nm aufweist,
   j) das mit der kolloidalen Zinndioxidlösung versetzte Gemisch mit so viel 20 bis 25 Gewichtsprozent HCl enthaltender Salzsäure bei 55 bis 65 °C peptisiert wird, daß ein Gewichtsverhältnis von in dieser Stufe zugesetzter Salzsäure berechnet als HCl zu $TiO_2$ von 0,15 : 1 bis 0,25 : 1 eingestellt ist,
   k) die erhaltene Suspension im Verlauf von 30 bis 40 Minuten zum Sieden erhitzt und 60 bis 90 Minuten beim Siedepunkt gehalten wird, und
   l) die Suspension bis zu einem pH-Bereich von 4 bis 11, vorzugsweise 6 bis 8 neutralisiert wird.

3. Verfahren nach Anspruch 1, dadurch gekennzeichnet, daß das feinteilige Titandioxid durch Hydrolyse einer bei den betreffenden Hydrolysebedingungen unter Rutilbildung hydrolysierenden Verbindung des vierwertigen Titans in Anwesenheit von Zinndioxid, dessen Teilchengröße 1 bis 10 nm, vorzugsweise 1 bis 4 nm beträgt, hergestellt wird.

4. Verfahren nach Anspruch 3, dadurch gekennzeichnet, daß als Verbindung des vierwertigen Titans Titantetrachlorid oder eine Verbindung eingesetzt wird, die durch die Umsetzung von Titantetrachlorid mit Wasser gebildet wird.

5. Verfahren nach einem oder mehreren der Ansprüche 1 bis 4, dadurch gekennzeichnet, daß das Zinndioxid in Form einer kolloidalen Lösung eingesetzt wird, welche durch langsame Zugabe von Zinntetrachlorid zu destilliertem Wasser bei einer Temperatur von maximal 22 °C bis zu einer Konzentration von 180 bis 220 g/l $SnO_2$, Verdünnen dieser Lösung mit destilliertem Wasser auf 10 g/l $SnO_2$, wobei die Temperatur von 22 °C nicht überschritten wird, und einstündiges Reifen der verdünnten Lösung bei 20 bis 22 °C hergestellt wird.

6. Verfahren nach einem oder mehreren der Ansprüche 2 bis 5, dadurch gekennzeichnet, daß das hergestellte Titandioxid aus der Suspension geflockt und durch Filtration von der flüssigen Phase abgetrennt wird.

7. Verfahren nach Anspruch 6, dadurch gekennzeichnet, daß das abgetrennte Titandioxid gewaschen wird.

8. Verfahren nach Anspruch 6 oder 7, dadurch gekennzeichnet, daß das abgetrennte Titandioxid getrocknet wird.

9. Verfahren nach Anspruch 8, dadurch gekennzeichnet, daß das getrocknete Titandioxid gemahlen wird.

10. Verfahren nach einem oder mehreren der Ansprüche 2 bis 9, dadurch gekennzeichnet, daß nach der Neutralisation, aber, im Falle einer Trocknung des Titandioxids, vor seiner Trocknung eine Substanz zugesetzt wird, die die Bildung harter Agglomerate verhindert.

11. Verfahren nach einem oder mehreren der Ansprüche 8 bis 10, dadurch gekennzeichnet, daß das getrocknete Titandioxid bei 300 bis 800 °C, vorzugsweise 400 bis 600 ºC getempert wird.

12. Verfahren nach einem oder mehreren der Ansprüche 1 bis 11, dadurch gekennzeichnet, daß das Titandioxid mit einer oder mehreren anorganischen und/oder organischen Substanzen nachbehandelt wird.

13. Feinteiliges Titandioxid, das im wesentlichen transparent für sichtbares Licht und im wesentlichen absorbierend für UV-Strahlung ist, bestehend aus nadelförmigen Teilchen mit Rutilstruktur mit einer Länge von 10 bis 100 nm und einem Längen:Durchmesserverhältnis von 8:1 bis 3:1, wobei diese Teilchen 1 bis 10 Gewichtsprozent $SnO_2$ enthalten.

14. Wässerige Suspension von feinteiligem Titandioxid gemäß Anspruch 13.

15. Feinteiliges Titandioxid, das im wesentlichen transparent für sichtbares Licht und im wesentlichen absorbierend für UV-Strahlung ist, bestehend aus abgerundeten Teilchen mit Rutilstruktur mit einem Durchmesser von 10 bis 100 nm, wobei diese Teilchen 0,5 bis 10 Gewichtsprozent $SnO_2$ enthalten.

16. Feinteiliges Titandioxid gemäß Anspruch 13 oder 15, enthaltend eine Beschichtung aus mindestens einer durch Nachbehandlung aufgebrachten anorganischen und/oder organischen Substanz.

17. Wässerige Suspension von feinteiligem Titandioxid gemäß Anspruch 16.

**Claims**

1. Process for the production of finely divided titanium dioxide which is substantially transparent to visible light and substantially absorbs UV radiation, characterised in that, during production of the finely divided titanium dioxide, finely divided tin dioxide of a particle size of 1 to 10 nm, preferably of 1 to 4 nm, is used in a quantity of 0.5 to 10 wt.%, related to the quantity of titanium dioxide produced.

2. Process according to claim 1, characterised in that

a) a hydrated titanium dioxide with anatase structure produced by hydrolysis of a titanyl sulphate solution is suspended in water to yield a suspension with a $TiO_2$ concentration of 20 to 26 wt.%,

b) the hydrated titanium dioxide suspension obtained is heated to 60 to 70°C,

c) the heated hydrated titanium dioxide suspension is stirred into a quantity of aqueous sodium hydroxide solution heated to 90 to 100°C such that after addition the ratio by weight of NaOH to $TiO_2$ in the mixture is 1.25 to 1.65,

d) the mixture is heated to boiling and held at boiling point for 120 to 140 minutes,

e) the mixture is then cooled to approximately 50 to 60°C and filtered,

f) the resultant filter cake is washed until the $SO_4^{2-}$ content in the washing filtrate is less than 0.05 g/l,

g) the washed filter cake is made into a paste with water with a $TiO_2$ content of 10 to 25 wt.% and the resultant mixture is combined with a hydrochloric acid containing 20 to 25 wt.% HCl until a pH of 2.8 to 3.1 is reached,

h) the mixture is heated to 55 to 65°C and left at this temperature for 30 to 45 minutes, wherein the pH range of 2.8 to 3.1 is maintained,

i) a colloidal tin dioxide solution is added to the mixture, in which solution the tin dioxide has a particle size of 1 to 10 nm, preferably of 1 to 4 nm,

j) the mixture combined with the colloidal tin dioxide solution is peptised at 55 to 65°C with a quantity of hydrochloric acid containing 20 to 25 wt.% HCl such that a weight ratio of the hydrochloric acid added in this stage calculated as HCl to $TiO_2$ of 0.15:1 to 0.25:1 is achieved,

k) the resultant suspension is heated to boiling over the course of 30 to 40 minutes and held at boiling point for 60 to 90 minutes and

l) the suspension is neutralised to a pH range of 4 to 11, preferably of 6 to 8.

3. Process according to claim 1, characterised in that the finely divided titanium dioxide is produced by hydrolysis of a tetravalent titanium compound which is hydrolysed to rutile under the prevailing hydrolysis conditions in the presence of tin dioxide of a particle size of 1 to 10 nm, preferably of 1 to 4 nm.

4. Process according to claim 3, characterised in that the tetravalent titanium compound used is titanium tetrachloride or a compound formed by the reaction of titanium tetrachloride with water.

5. Process according to one or more of claims 1 to 4, characterised in that the tin dioxide is used in the form of a colloidal solution produced by slowly adding tin tetrachloride to distilled water at a maximum temperature of 22°C to a concentration of 180 to 220 g/l $SnO_2$, diluting this solution with distilled water to 10 g/l $SnO_2$, wherein the temperature of 22°C is not exceeded, and maturing the dilute solution for one hour at 20 to 22°C.

6. Process according to one or more of claims 2 to 5, characterised in that the titanium dioxide produced is flocculated out of the suspension and separated from the liquid phase by filtration.

7. Process according to claim 6, characterised in that the separated titanium dioxide is washed.

8. Process according to claim 6 or 7, characterised in that the separated titanium dioxide is dried.

9. Process according to claim 8, characterised in that the dried titanium dioxide is ground.

10. Process according to one or more of claims 2 to 9, characterised in that, after neutralisation but, in the event that the titanium dioxide is dried, before drying, a substance is added which prevents the formation of hard agglomerates.

11. Process according to one or more of claims 8 to 10, characterised in that the dried titanium dioxide is heat-treated at 300 to 800°C, preferably 400 to 600°C.

12. Process according to one or more of claims 1 to 11, characterised in that the titanium dioxide is post-treated with one or more inorganic and/or organic substances.

**13.** Finely divided titanium dioxide which is substantially transparent to visible light and substantially absorbs UV radiation consisting of acicular particles with a rutile structure with a length of 10 to 100 nm and a length:diameter ratio of 8:1 to 3:1, wherein these particles contain 1 to 10 wt.% $SnO_2$.

**14.** Aqueous suspension of finely divided titanium dioxide according to claim 13.

**15.** Finely divided titanium dioxide which is substantially transparent to visible light and substantially absorbs UV radiation consisting of rounded particles with a rutile structure with a diameter of 10 to 100 nm, wherein these particles contain 0.5 to 10 wt.% $SnO_2$.

**16.** Finely divided titanium dioxide according to claim 13 or 15 containing a coating of at least one inorganic and/or organic substance applied by post-treatment.

**17.** Aqueous suspension of finely divided titanium dioxide according to claim 16.

**Revendications**

**1.** Procédé de préparation de dioxyde de titane finement divisé, qui est essentiellement transparent à la lumière visible et essentiellement absorbant pour le rayonnement ultra-violet, procédé caractérisé en ce qu'on utilise lors de la préparation du dioxyde de titane finement divisé, du dioxyde d'étain finement divisé, dont la grosseur des particules est de 1 à 10 nm, avantageusement 1 à 4 nm, et qui est utilisé en une quantité de 0,5 à 10 % en poids, par rapport à la quantité du dioxyde de titane préparé.

**2.** Procédé selon la revendication 1, caractérisé en ce que :

a) on met en suspension un dioxyde de titane dihydraté, préparé par hydrolyse d'une solution de sulfate de titanyle et ayant une structure d'anatase, dans de l'eau pour obtenir une suspension ayant une concentration de 20 à 26 % en poids de $TiO_2$;

b) on chauffe à 60 jusqu'à 70°C la suspension de dioxyde de titane hydraté ainsi obtenue;

c) on ajoute sous agitation la suspension de dioxyde de titane hydraté ainsi chauffée à une quantité de solution aqueuse d'hydroxyde de sodium, chauffée à 90 jusqu'à 100°C telle qu'après cette addition le rapport pondéral entre NaOH à $TiO_2$ vale dans le mélange 1,25 à 1,65;

d) on chauffe le mélange à l'ébullition et on le maintient à l'ébullition durant 120 à 140 minutes;

e) on refroidit ensuite le mélange à environ 50 à 60°C et l'on filtre,

f) on lave le gâteau de filtre ainsi obtenu jusqu'à ce que la teneur en $SO_4^{2-}$ soit dans le filtrat de lavage inférieure à 0,05 g/litre;

g) on empâte le gâteau de filtre ainsi lavé en lui ajoutant de l'eau jusqu'à une teneur en $TiO_2$ de 10 à 25 % en poids, et l'on y ajoute de l'acide chlorhydrique, contenant 20 à 25 % en poids de HCl, jusqu'à obtenir une valeur de pH de 2,8 à 3,1;

h) on chauffe le mélange à 55 jusqu'à 65°C et on l'abandonne à cette température durant 30 à 45 minutes, en maintenant le pH de 2,8 à 3,1;

i) on ajoute au mélange une solution colloïdale de dioxyde d'étain dans laquelle le dioxyde d'étain présente une grosseur des particules de 1 à 10 nm, avantageusement 1 à 4 nm;

j) on soumet le mélange, additionné de la solution colloïdale de dioxyde d'étain, à une peptisation à 55 jusqu'à 65°C à l'aide d'une quantité d'acide chlorhydrique contenant 20 à 25 % en poids d'HCl, telle que l'on obtienne un rapport pondéral entre l'acide chlorhydrique, ajouté dans cette étape et calculé en HCl et $TiO_2$ valant 0,15:1 à 0,25:1,

k) on chauffe à l'ébullition, en l'espace de 30 à 40 minutes, la suspension ainsi obtenue et on la maintient durant 60 à 90 minutes au point d'ébullition et,

l) on neutralise la suspension jusqu'à un pH de 4 à 11, avantageusement de 6 à 8.

**3.** Procédé selon la revendication 1, caractérisé en ce qu'on prépare le dioxyde de titane, finement divisé, par hydrolyse d'un composé du titane tétravalent, qui s'hydrolyse dans les conditions d'hydrolyse en cause avec formation de rutile, en opérant en présence de dioxyde d'étain dont la grosseur des particules vaut de 1 à 10 nm, avantageusement 1 à 4 nm.

**4.** Procédé selon la revendication 3, caractérisé en ce qu'on utilise comme composé du titane tétravalent du tétrachlorure de titane ou un composé qui est formé par la réaction du tétrachlorure de titane avec l'eau.

**5.** Procédé selon une ou plusieurs des revendications 1 à 4, caractérisé en ce qu'on utilise le dioxyde d'étain sous forme d'une solution colloïdale, que l'on prépare par lente addition de tétrachlorure d'étain à de l'eau distillée, à une température d'au maximum 22°C, jusqu'a une concentration de 180 à 220 g/l de $SnO_2$, dilution de cette solution avec de l'eau distillée jusqu'à obtenir une teneur de 10 g/l $SnO_2$, la température de 22°C n'étant pas dépassée, et une heure de murissage à 20 jusqu'à 22°C de la solution diluée.

**6.** Procédé selon une ou plusieurs des revendications 2 à 5, caractérisé en ce que le dioxyde de titane préparé se sépare par floculation de la suspension et on le sépare par filtration de la phase liquide.

**7.** Procédé selon la revendication 6, caractérisé en ce qu'on lave le dioxyde de titane séparé.

**8.** Procédé selon la revendication 6 ou 7, caractérisé en ce qu'on sèche le dioxyde de titane séparé.

**9.** Procédé selon la revendication 8, caractérisé en ce qu'on broye le dioxyde de titane séché.

**10.** Procédé selon une ou plusieurs des revendications 2 à 9, caractérisé en ce qu'après la neutralisation mais, dans le cas d'un séchage du dioxyde de titane, avant son séchage, on ajoute une substance qui empêche la formation d'agglomérats durs.

**11.** Procédé selon une ou plusieurs des revendications 8 à 10, caractérisé en ce qu'on soumet le dioxyde de titane séché à de tempérage 300 jusqu'à 800°C, avantageusement à 400 jusqu'à 600°C.

**12.** Procédé selon une ou plusieurs des revendications 1 à 11, caractérisé en ce qu'on soumet le dioxyde de titane à du post-traitement avec une ou plusieurs substances minérales et/ou organiques.

**13.** Dioxyde de titane finement divisé, qui est essentiellement transparent à la lumière visible et est essentiellement absorbant pour le rayonnement ultra-violet, ce dioxyde consistant en des particules aciculaires à structure de rutile ayant une longueur de 10 à 100 nm et un rapport entre la longueur et le diamètre de 8:1 à 3:1, ces particules contenant 1 à 10 % en poids de $SnO_2$.

**14.** Suspension aqueuse de dioxyde de titane finement divisé selon la revendication 13.

**15.** Dioxyde de titane finement divisé, qui est essentiellement transparent à la lumière visible et est essentiellement absorbant pour du rayonnement ultra-violet, ce dioxyde consistant en particules arrondies à structure de rutile ayant un diamètre de 10 à 100 nm, ces particules contenant 0,5 à 10 % en poids de $SnO_2$.

**16.** Dioxyde de titane finement divisé selon la revendication 13 ou 15, comportant un enduit de revêtement formé d'au moins une substance minérale et/ou organique appliquée par post-traitement.

**17.** Suspension aqueuse de dioxyde de titane finement divisé, selon la revendication 16.